## Europäisches Patentamt

## European Patent Office

## Office européen des brevets

(19)

(11) Veröffentlichungsnummer: **0 155 230**
**B1**

(12) **EUROPÄISCHE PATENTSCHRIFT**

(45) Veröffentlichungstag der Patentschrift:
16.12.87

(21) Anmeldenummer: **85810077.9**

(22) Anmeldetag: **26.02.85**

(51) Int. Cl.⁴: **C 04 B 35/52, H 05 B 7/09**

(54) Kohlenstoffmasse und Verfahren zu deren Herstellung.

(30) Priorität: **07.03.84 CH 1129/84**

(43) Veröffentlichungstag der Anmeldung:
**18.09.85 Patentblatt 85/38**

(45) Bekanntmachung des Hinweises auf die Patenterteilung:
**16.12.87 Patentblatt 87/51**

(84) Benannte Vertragsstaaten:
**AT BE CH DE FR GB IT LI LU NL SE**

(56) Entgegenhaltungen:
**FR-A-2 295 914**
**GB-A-1 434 824**
**US-A-3 261 892**

**CHEMICAL ABSTRACTS, Band 94, Nr. 8, 23. Februar 1981, Seite 289, Nr. 51799r, Columbus, Ohio, US**

(73) Patentinhaber: **SCHWEIZERISCHE ALUMINIUM AG, CH- 3965 Chippis (CH)**

(72) Erfinder: **Förster, Ludwig, Unter dem Dorf 7, D-7880 Bad Säckingen (DE)**
Erfinder: **Franke, Alois, Karl Fürstenbergstrasse 90, D-7888 Rheinfelden (DE)**
Erfinder: **Nobel, Reinhard, Schillerstrasse 25, D-7867 Wehr II (DE)**

EP 0 155 230 B1

2

## Beschreibung

Die Erfindung bezieht sich auf eine Kohlenstoffmasse für selbstkalzinierende Elektroden, insbesondere Söderberganoden, refraktäre Auskleidungen und Verbindungen von Elektrodenanschlüssen mit Granulaten von Anthrazit, Graphit, Petrolkoks, Pechkoks, metallurgischem Koks und/oder Auskleidungs- bzw. Elektrodenresten als Feststoff sowie Bindemittel und auf ein Verfahren zum Herstellen dieser Kohlenstoffmasse.

Refraktäre Auskleidungen, selbstkalzinierende Elektroden sowie Verbindungen von Elektrodenanschlüssen bestehen meist aus Kohlenstoffmassen, die aus Feststoffen und Bindemitteln durch Kalzination bzw. Graphitisierung hergestellt werden. Als Bindemittel wird in grossem Umfang Steinkohlenteerpech verwendet, weil es bei der Kalzination bzw. Graphitisierung einen hohen Trocken- bzw. Koksrückstand - in der Regel zwischen 50 und 60 Gew.-% - aufweist.

Aus der US-PS-3 261 892 ist es bekannt, vorgeformte Elektroden herzustellen, indem pulverförmige bis körnige Kohlepartikel mit 5-15 Vol.-% flüssigem Bitumen (bezogen auf das Elektrodenvolumen) eingesprüht, geformt und durch einen exotherm verlaufenden Oxidationsprozess bei etwa 300°C gebacken werden.

Die GB-PS-1 434 824 beschreibt ein Verfahren zur Herstellung von vorgeformten Elektroden. Gemahlene, kalzinierte Kohlenstoffasern und ein verkokbares Bindemittel werden bei einer Temperatur zusammengemischt, bei welcher das Bindemittel flüssig ist. Als verkokbares Bindemittel wird unter anderem auch Bitumen erwähnt.

Mit Bitumen bezeichnet man nach DIN 55 946 die bei der schonenden Aufbereitung von Erdölen gewonnenen, dunkelfarbigen, halbfesten bis springharten, schmelzbaren, hochmolekularen Kohlenwasserstoffgemische und die in Schwefelkohlenstoff löslichen Anteile der natürlichen Asphalte sowie Erdwachs und Montanwachs.

Auf gesundheitliche Aspekte wird in keiner der Schriften eingegangen.

Verschiedene Untersuchungen haben gezeigt, dass Steinkohlenteerpech polycyclische aromatische Kohlenwasserstoffe enthält, die bei der Herstellung und/oder beim Betrieb von refraktären Auskleidungen und selbstkalzinierenden Elektroden gasförmig entweichen. Die polycyclischen aromatischen Kohlenwasserstoffe können krebsauslösend sein. Die bei der Herstellung oder Verwendung eingangs genannten Kohlenstoffmassen mit Steinkohlenteerpech als Bindemittel entstehenden Bindemitteldämpfe sind daher geeignet, gesundheitsschädigend auf Industriearbeiter und Umwelt einzuwirken.

In einer Anzahl westeuropäischer Länder und in den Vereinigten Staaten existieren daher bereits diesbezüglich behördliche Auflagen zum Schutz der Industriearbeiter vor den potentiell gesundheitsschädigenden Bindemitteldämpfen. Derartige Auflagen sind in nächster Zeit von weiteren Ländern zu erwarten.

Der Hersteller von refraktären Ofenauskleidungen und Elektroden bzw. deren Betreiber steht vor der Wahl, die potentiell gesundheitsschädigenden polycyclischen aromatischen Kohlenwasserstoffe mit Hilfe von Reinigungsanlagen auf die gesetzlich vorgeschriebene Werte herabzumindern oder sonstwie unschädlich zu machen.

Die Erfinder haben sich die Aufgabe gestellt, eine verbesserte Kohlenstoffmasse für selbstkalzinierende Elektroden, insbesondere Söderberganoden, refraktäre Auskleidungen und Verbindungen von Elektrodenanschlüssen und ein Verfahren zur Herstellung der Kohlenmasse zu schaffen, die weder bei der Herstellung noch beim Betrieb der refraktären Auskleidungen, selbstkalzinierenden Elektroden oder Elektrodenanschlüsse polycyclische aromatische Kohlenwasserstoffe in gesundheitsgefährdender Konzentration entweichen lässt, aber dennoch dem Stand der Technik entsprechend hochwertige Produkte bei günstigen Gestehungskosten gewährleistet.

In bezug auf die Kohlenstoffmasse wird die Aufgabe erfindungsgemäss dadurch gelöst, dass das Bindemittel zu 70-90 Gew.-% aus einem als Hartbitumen bezeichneten Bitumen mit einem Erweichungspunkt (nach Ring und Kugel) von etwa 80 bis 110°C und zu 10 bis 30 Gew.-% aus einem als Weichbitumen bezeichneten Bitumen mit einem Erweichungspunkt von etwa 40 bis 65°C besteht, wobei die Dichte der beiden Bitumensorten nicht über 1.1 g/m³ (bei 25°C) liegt.

Im Gegensatz zu Steinkohlenteerpech enthält Bitumen polycyclische aromatische Kohlenwasserstoffe nur in ausserordentlich kleiner, für die Gesundheit des Industriearbeiters nicht schädlicher Konzentration. Insbesondere sind die polycyclischen Aromate der Ringzahl 4-6 in den während der Aufwärmphase des Bitumens entstehenden Bindemitteldämpfen nicht zu erwarten. Die bei der Herstellung oder beim Betrieb entweichenden Dämpfe bestehen vorwiegend aus Naphtenoaromaten und Alkylarylen. Ein carcinogenes Gesundheitsrisiko ist deshalb weder bei der Herstellung der Kohlenstoffmasse noch bei deren Weiterverwendung z.B. als refraktäre Ofenauskleidung oder selbstkalzinierende Elektrode gegeben.

Zur Lösung der Aufgabe könnten die eingangs genannten Patentschriften möglicherweise Anregungen geben, die Aufgabe wird dadurch jedoch nicht gelöst. Zum einen findet sich in keiner der Schriften ein Hinweis auf die nicht gesundheitsschädigende Wirkung von Bitumen und zum anderen beziehen sich die Schriften auf geformte Gegenstände, insbesondere auf Festkörperelektroden, bei denen bekanntlich die für den Vorgang des Formens verwendete Kohlenstoffmasse eine andere Konsistenz haben muss als eine Masse für refraktäre Auskleidungen von z. B. Öfen oder Tiegeln, Söderberganoden oder zum Vergiessen von Elektrodenanschlüssen. Für derartige Zwecke muss die Masse nämlich insbesondere eine wesentlich höhere Plastizität als für Festkörperelektroden aufweisen.

Eine erhöhte Plastizität der Masse wird üblicherweise durch Zugabe von Bindemitteln in einer Menge, die über die notwendige zur Bindung der Kohlenstoffpartikel hinaus geht, erwartet, wodurch zwangsläufig die gesundheitsschädliche Konzentration der polycyclischen aromatischen Kohlenwasserstoffe erhöht wird. Geht man in dieser Weise unter Verwendung von ausschliesslich Weichbitumen vor, so erweist sich das Produkt bei der angestrebten Plastizität als zu klebrig in der Handhabung. Bei Verwendung einer solchen Masse für Söderberganoden bildet sich innerhalb von 5 Wochen auf der Oberfläche der Anode ein Bitumensee wie er analog bei Verwendung von Steinkohlenteerpech auftreten kann. Ansonsten führt die Verwendung des Weichbitumens als Bindemittel in den dem Steinkohlenteerpech adäquaten Mengen nach der Kalzination zu geringem Trockenrückstand, damit zu hoher Porosität und unzureichender Bindekraft der Feststoffteilchen. Verwendet man andererseits nur Hartbitumen und versucht damit die für den angestrebten Zweck notwendige Plastizität zu erreichen, so gelingt dies nur in sehr unvollkommener Weise. Die Plastizität wird nämlich nur bei erwärmter Kohlenstoffmasse erreicht. Kühlt die Masse ab, so verringert sich ihre Plastizität derart, dass eine Verarbeitung für die vorgenannten Zwecke infolge zu geringer Fliessfähigkeit nicht mehr gegeben ist.

Erst bei Verwendung von Hart- und Weichbitumen im Verhältnis gemäss der Erfindung werden Kohlenstoffmassen, die die angestrebten Eigenschaften aufweisen, erhalten.

Angesichts des bekannt geringen Trockenrückstands bei Bitumen von etwa 38 Gew.-% im Gegensatz zu Steinkohlenteerpech von etwa 50-60 Gew.-% ging der Fachmann bisher davon aus, dass die Verwendung von Bitumen als Bindemittel bei der Herstellung von Kohlenstoffmassen für selbstkalzinierende Elektroden, insbesondere Söderberganoden, refraktäre Auskleidungen, z. B. für Öfen oder Tiegel, sowie für Verbindungen von Elektrodenanschlüssen grundsätzlich unzweckmässig sei. Diese Geringschätzung des Bitumens für die vorgenannten Zwecke erstaunt um so mehr, als das Problem der gesundheitsgefährdenden Wirkung bei Verwendung von Kohlenstoffmassen mit Bindemitteln auf Steinkohlenteerpechbasis gerade in diesem Bereich seit langem erkannt war und gleichzeitig bekannt war, dass Bitumen diese Wirkung nur in einem sehr geringen Masse aufweist.

Erst durch die vorliegende Erfindung ist das Vorurteil der Unzweckmässigkeit des Einsatzes von Bitumen für die Zwecke nach der Erfindung überwunden worden. Erstmals ist nämlich gefunden worden, dass es bei der Anwendung von Bitumen als Bindemittel für Kohlenstoffmassen zu vorgenannten Zwecken nicht nur auf die Menge des Bitumens ankommt, sondern auch auf dessen Qualität und insbesondere auf das Verhältnis der Qualitäten zueinander.

Im Gebrauchszustand haben die erfindungsgemässen Kohlenstoffmassen sowohl eine hohe elektrische Leitfähigkeit als auch eine hohe thermische Beständigkeit. Die eingesetzten selbstkalzinierenden Anoden (Söderberganoden) und Tiegel bzw. Ofenauskleidungen aus der erfindungsgemässen Kohlenstoffmasse sowie die Vergussmasse bei Elektrodenanschlüssen haben auch gegenüber mechanischen und chemischen Beanspruchungen eine gute Resistenz. Die erfindungsgemässen Kohlenstoffmassen erreichen somit den angestrebten Qualitätsstandard.

Für den Fachmann überraschend ist neben der hohen Qualität die wirtschaftliche Konkurrenzfähigkeit der erfindungsgemässen Kohlenstoffmasse; angesichts des geringen Trockenrückstandes von Bitumen musste ihm der Einsatz von zwei verschiedenen Bitumen im industriellen Maßstab als auch vom wirtschaftlichen Standpunkt aus als unmögliches Unterfangen erscheinen.

Die Kohlenstoffmasse besteht vorzugsweise aus 60-90 Gew.-%, insbesondere 68-87 Gew.-%, Feststoffen, und 10-40 Gew.-%, insbesondere 13-32 Gew.-%, Bitumen. Als Feststoffe werden entsprechend dem Stand der Technik zweckmässig Granulate aus Anthrazit, Graphit, Petrolkoks, Pechkoks und/oder metallurgischem Koks eingesetzt. In bestimmten Anwendungsfällen können zusätzlich oder ausschliesslich granulierte Auskleidungs- bzw. Elektrodenresten eingesetzt werden. Die Korngrösse der Granulate liegt vorteilhafterweise zwischen 0 und 14 mm.

Die Feststoffe, ihre Granulometrie, die Bitumenzusammensetzung und das Verhältnis Feststoffe/Bitumen werden je nach Anforderung geändert; so muss beispielsweise die Plastizität, der Erweichungspunkt oder der Aschegehalt in gewissen Grenzen variierbar sein.

Zur Erhöhung des Trocken- bzw. Koksrückstandes des Bitumens und zur Verbesserung der Abbrandeigenschaften der Masse - z. B. für Söderberganoden - werden 0,3-2 Gew.-%, vorzugsweise 0,5-1,5 Gew.-%, bezogen auf die Kohlenstoffmasse, anorganische Additive zugegeben. Diese Additive bestehen insbesondere aus Al, $Al_2O_3$, B, $B_2O_3$, Si und/oder $SiO_2$.

In Bezug auf das Verfahren zum Herstellen der Kohlenstoffmasse wird die Erfindung dadurch gelöst, dass

- der Feststoff homogen durchmischt und auf eine Temperatur von 130-180°C gebracht wird,
- das Hartbitumen auf eine Temperatur zwischen 150 und 220°C, jedoch über die Temperatur des Feststoffs erwärmt und unter intensivem Mischen in dünnflüssigem Zustand langsam zum Feststoff gegeben wird,
- das Weichbitumen bei einer Temperatur von 70-100°C in einen dünnflüssigen Zustand gebracht und nach dem Hartbitumen unter intensivem Mischen langsam zugegeben wird und
- die Kohlenstoffmasse während höchstens 60 Minuten bei der zu Beginn für den Feststoff eingestellten Temperatur weiter gemischt, aus dem Mischer entfernt und abgekühlt wird.

Die warme Kohlenstoffmasse wird vorteilhaft dadurch abgekühlt, dass sie durch ein oberhalb eines kalten Wasserbades angeordnetes, beheiztes Sieb gegeben wird. Die so im Wasser abgeschreckte Kohlenstoffmasse erstarrt zu tannenzapfenförmigen Graupeln.

Die warme Kohlenstoffmasse kann auch ungeteilt durch Abkühlen erstarren und dann mit einem Brecher granuliert werden.

Überraschend wird ein sehr gutes Qualitätsergebnis erzielt, wenn zuerst das höher schmelzende, dann das tiefer schmelzende Bitumen zugegeben wird.

Geht man in umgekehrter Reihenfolge vor, so infiltriert das tiefer schmelzende Bindemittel die Porenräume des Feststoffes. Es steht dann nicht mehr als eigentliches Bindemittel zur Verfügung, was zur Folge hat, dass die Bindemittelmatrix reduziert ist. Um eine dem Stand der Technik gemässe Qualität der Kohlenstoffmasse zu erzeugen, müsste der Verlust an Bindemittel ersetzt werden. Dies führt wiederum im Verkokungsstadium zu einer Anreicherung des Porenvolumens in der Bindemittelmatrix und damit zur Schwächung derselben.

Die Verwendungsmöglichkeit der hergestellten Kohlenstoffmassen sind vielfältig, als Beispiele seien genannt: Kathodenauskleidungen, Söderberganoden, durch Kragenschutz ummantelte Anodenstangen bei vorgebrannten Anoden in der Schmelzflusselektrolyse zur Herstellung von Aluminium, Auskleidungen von Tiegeln und Hochöfen, sowie von elektrischen Lichtbogenöfen, elektrischen Reduktionsöfen zur Herstellung von Roheisen, Ferrolegierungen, Calciumcarbid, Phosphor und Korund.

Die Erfindung wird anhand der folgenden Ausführungsbeispiele näher erläutert.

**Beispiel 1**

Eine Stampfmasse zur Auskleidung der Ofenböden und -wände für metallurgische Prozesse hat folgende Komponenten: 45 Gew.-% Anthrazit, 33 Gew.-% Petrolkoks und 22 Gew.-% Bitumen (16 Gew.-% hart, 6 Gew.-% weich). Die Anthrazitfraktion hat folgende Kornverteilung (Siebanalyse): 5-14 mm: 29 %, 1-5 mm: 42 %, 0-1 mm: 19 %. Die ganze Petrolkoksfraktion hat eine Korngrösse von ⩽ 0,1 mm.

Der aus Anthrazit und Petrolkoks bestehende Feststoff wird auf 160°C vorgewärmt und unter homogenem Durchmischen auf dieser Temperatur gehalten. Dann wird das auf 190°C erwärmte Hartbitumen, anschliessend das auf 90°C erwärmte Weichbitumen langsam und so dosiert zugegeben, dass sich der Feststoff mit Bindemittel umhüllt. Während der Zugabe des dünnflüssigen Bindemittels wird intensiv weiter gerührt, die Mischtemperatur bleibt dabei auf ca. 160°C.

Die Mischung wird noch etwa 20 Minuten intensiv weitergemischt, wonach eine gute Homogenität erreicht ist. Dann wird die warme Kohlenstoffmasse durch ein beheiztes Sieb in kaltes Wasser gegossen, wo die Masse zu Graupeln erstarrt. Diese sind z. B. auch einsetzbar für monolithische Ofenauskleidungen bzw. selbstkalzinierende Elektroden von unterschiedlichen Dimensionen.

Die Mengen an polycyclischen aromatischen Kohlenwasserstoffen konnten so in der Kohlenstoffmasse von 17'000 µg/g bei Verwendung von Steinkohlenteerpech auf 11 µg/g herabgesetzt werden. Die Atmosphäre, der der Industriearbeiter ausgesetzt war, enthielt bei der Berstellung von Kohlenstoffmassen unter Verwendung von Steinkohlenteerpech 150 µg/m$^3$ polycyclische aromatische Kohlenwasserstoffe. Bei der Herstellung der Kohlenstoffmasse mit Bitumen als Bindemittel gemäss dem Beispiel ging die Konzentration an polycyclischen aromatischen Kohlenwasserstoffen auf 9 µg/m$^3$ zurück.

**Beispiel 2**

Eine Kohlenstoffmasse für in der Aluminiumelektrolyse eingesetzte Söderberganoden wird gemäss Beispiel 1 hergestellt, indem 68 Gew.-% Petrolkoks als Feststoff und 32 Gew.-% Bitumen als Bindemittel eingesetzt werden. Der Petrolkoks weist folgende Kornverteilung auf (Siebanalyse): >8 mm: 3 %, 3-8 mm: 20 %, 1-3 mm: 12 %, <1 mm: 65 %. Es wird Bitumen im Verhältnis 90 Gew.-% Hartbitumen zu 10 Gew.-% Weichbitumen eingesetzt.

Die gemessene Arbeitsplatzkonzentration an polycyclischen aromatischen Kohlenwasserstoffen im Ofenbereich erreicht einen ähnlich niedrigen Wert wie in Beispiel 1, nämlich 7 µg/m$^3$. Eine Änderung der Söderbergtechnologie - Erhöhung des Anodenstocks in den Söderbergöfen - ist mit Hilfe der erfinderischen Kohlenstoffmasse nicht erforderlich.

In einer Variante werden 1,0 Gew.-% Aluminiumoxid als Additiv zugegeben. Die Söderberganode zeigte normales Abbrandverhalten ohne Griesen und keine Entmischungen (keine Seebildung).

**Beispiel 3**

Mit dem Verfahren von Beispiel 1 werden Kohlenstoffmassen hergestellt, die unterschiedliche Mengen von Anodenresten enthalten. Die Kohlenstoffmasse ist hergestellt aus

a) 83,5 Gew.-% Petrolkoks, 14,5 Gew.-% Hart- und 2 Gew.-% Weichbitumen. Die Kornverteilung des Feststoffs (Siebanalyse) ist: >8 mm: 5 %, 3-8 mm: 25 %, 1-3 mm: 25 %, <1 mm: 45 %.

b) 67 Gew.-% Petrolkoks, 17 Gew.-% Anodenresten, 14 Gew.-% Hart- und 2 Gew.-% Weichbitumen. Der Feststoff hat folgende Kornverteilung (Siebanalyse): >8 mm: 3 %, 3-8 mm: 20 %, 1-3 mm: 25 %, <1 mm: 52 %.

c) 84 Gew.-% Anodenresten, 13 Gew.-% Hart- und 3 Gew.-% Weichbitumen. Die Kornverteilung des Feststoffs (Siebanalyse) ist: >8 mm: 5 %, 3-8 mm: 25 %, 1-3 mm: 25 %, <1 mm: 45 %.

Der Anodenfabrikant kann die Kohlenstoffmassen in der Verwendung angepasstem Verhältnis mischen.

Trotz der in den Anodenresten enthaltenen Substanzen wie z. B. Natriumfluorid und Kalziumfluorid, welche einen negativen Einfluss auf das Abbrandverhalten der Kohlenstoffmasse ausüben und den in geringen Mengen ebenfalls anwesenden Aluminiumfluorid, welches diesbezüglich eher positiv wirkt, lässt sich eine qualitativ hochwertige Masse unter Beimischung von Recyclingmaterial herstellen, da offenbar dieses dichte Material wegen des geringen Porenvolumens weniger Bindemittel aufnehmen kann.

**Beispiel 4**

Für die Herstellung von Korund werden Elektroöfen im Bereich des Tiegelbodens und der Seitenwände mit einem refraktären Material ausgekleidet, das aus einer Kohlenstoffmasse hergestellt ist. Für diese Kohlenstoffmasse sind 87 Gew.-% Anthrazit, Petrolkoks bzw. Elektrodenreste und 13 Gew.-% Bitumen - 10 Gew.-% Hart-, 3 Gew.-% Weichbitumen - gemäss Beispiel 1 verarbeitet worden. Die gemahlenen Feststoffe haben folgende Kornverteilung (Siebanalyse): >8 mm: 3 %, 3-8 mm: 13 %, 1-3 mm: 23 %, <1 mm: 61 %.

Die bei Verwendung von Steinkohlenteerpech als Bindemittel hergestellten Massen für den selben Zweck lassen bei der notwendigen Kalzination der Auskleidung immer polycyclische aromatische Kohlenwasserstoffe in derart hohen Konzentrationen entstehen, dass für den Industriearbeiter Massnahmen zu dessen Schutz ergriffen werden müssen, z. B. Filteranlagen zur Reinigung der Umgebungsluft. Diese Massnahmen sind bei Verwendung der erfinderischen Kohlenstoffmasse nicht erforderlich, da solche hohen Konzentrationen an polycyclischen aromatischen Kohlenwasserstoffen nicht auftreten.

**Patentansprüche**

1. Kohlenstoffmasse für selbstkalzinierende Elektroden, insbesondere Söderberganoden, refraktäre Auskleidungen und Verbindungen von Elektrodenanschlüssen mit Granulaten von Anthrazit, Graphit, Petrolkoks, Pechkoks, metallurgischem Koks und/oder Auskleidungs- bzw. Elektrodenresten als Feststoff sowie Bindemittel
dadurch gekennzeichnet, dass
das Bindemittel zu 70-90 Gew.-% aus einem als Hartbitumen bezeichneten Bitumen mit einem Erweichungspunkt (nach Ring und Kugel) von etwa 80 bis 110°C und zu 10 bis 30 Gew.-% aus einem als Weichbitumen bezeichneten Bitumen mit einem Erweichungspunkt von etwa 40 bis 65°C besteht, wobei die Dichte der beiden Bitumensorten nicht über 1.1 $g/m^3$ (bei 25 °C) liegt.

2. Kohlenstoffmasse nach Anspruch 1, dadurch gekennzeichnet, dass diese 0,3-2 Gew.-%, vorzugsweise 0,5-1,5 Gew.-% anorganische Additive, bezogen auf die Kohlenstoffmasse, enthält.

3. Kohlenstoffmasse nach Anspruch 2, dadurch gekennzeichnet, dass die Additive aus Al, $Al_2O_3$, B, $B_2O_3$, Si und/ oder $SiO_2$ bestehen.

4. Verfahren zum Herstellen einer Kohlenstoffmasse nach einem der Ansprüche 1 bis 3,
dadurch gekennzeichnet, dass
- der Feststoff homogen durchmischt und auf eine Temperatur von 130-180°C gebracht wird,
- das Hartbitumen auf einer Temperatur zwischen 150 und 220°C, jedoch über die Temperatur des Feststoffs erwarmt und unter intensivem Mischen in dünnflüssigem Zustand langsam zum Feststoff gegeben wird,
- das Weichbitumen bei einer Temperatur von 70-100°C in einen dünnflüssigen Zustand gebracht und nach dem Hartbitumen unter intensivem Mischen langsam zugegeben wird und
- die Masse während höchstens 60 Minuten bei der zu Beginn für den Feststoff eingestellten Temperatur weiter gemischt, aus dem Mischer entfernt und abgekühlt wird.

**Claims**

1. Carbon mass for self-calcining electrodes, especially Söderberg anodes, refractory linings and connections of electrode terminals with granulates of anthracite, graphite, petroleum coke, pitch coke, metallurgical coke and/or lining or electrode residues as solid substance, also binding agent, characterised in that

70 - 90 % wt. of the binding agent consist of a bitumen, called hard bitumen, having a softening point (by ring and ball test) of about 80 to 110°C. and 10 to 30 % wt. consist of a bitumen, called soft bitumen, having a softening point of about 40 to 65°C., while the density of the two types of bitumen lies not above 1.1 g./cu.m (at 25°C)

2. Carbon mass according to Claim 1, characterised in that it contains 0.3 - 2 % wt., preferably 0.5 - 1.5 % wt., of inorganic additives, in relation to the carbon mass.

3. Carbon mass according to Claim 2, characterised in that the additives consist of Al Al$_2$O$_3$ , B, B$_2$O$_3$ Si and/or SiO$_2$.

4. Process for the production of a carbon mass according to one of Claims 1 to 3, characterised in that

the solid substance is thoroughly mixed to homogeneity and brought to a temperature of 130 - 180°C.,

the hard bitumen is heated to a temperature between 150 and 220°C., but above the temperature of the solid substance and slowly added, with intensive mixing, in the thinly liquid condition, to the solid substance,

the soft bitumen is brought at a temperature of 70-100°C into a thinly liquid condition and added after the hard bitumen, slowly with intensive mixing, and the mass is mixed further for at most 60 minutes at the temperatture set at the beginning for the solid substance, removed from the mixer and cooled.

**Revendications**

1. Masse de carbone pour électrodes autocalcinantes, an particuller anodes de Sōderberg, revêtements réfractaires et combinaisons de jonctions d'électrodes avec des granulés d'anthracite, de graphite, de coke de pétrole, de coke de brai, de coke métallurgique et/ou de résidus de revêtements ou d'électrodes comme matière solide et un liant,

caractérisée en ce que le liant consiste pour 70-90 % en poids en un bitume dénommé bitume dur d'un point de ramollissement (selon la méthode bille et anneau) d'environ 80 à 110°C, et pour 10 à 30 % en poids en un bitume dénommé bitume mou d'un point de ramollissement d'environ 40 à 65°C, la densité des deux types de bitumes étant de pas plus de 1,1 g/m$^3$ (à 25°C).

2. Masse de carbone selon la revendication 1, caractérisée en ce qu'elle contient 0,3-2 % en poids d'additifs inorganiques, par rapport à la masse de carbone, de préférence 0,5-1,5 % en poids.

3. Masse de carbone selon la revendication 2, caractérisée en ce que les additifs consistent en Al, Al$_2$O$_3$, B, B$_2$O$_3$, Si et/ou SiO$_2$.

4. Procédé pour la fabrication d'une masse de carbone selon l'une des revendications 1 à 3, caractérisé en ce que:

- on brasse la matière solide de manière uniforme et on l'amène à une température de 130-180°,C,

- on chauffe le bitume dur à une température comprise entre 150 et 220°C, mais au-dessus de la température de la matière solide et on l'ajoute lentement à l'état fluide, en agitant énergiquement, à la matiére solide,

- on amène le bitume mou à l'état fluide à une température de 70-100°C et on l'ajoute lentement en agitant énergiquement après le bitume dur, et

- on mélange encore la masse pendant au plus 60 minutes à la température réglée au début pour la matière solide, on la retire du mélangeur et on la refroidit.